# EUROPÄISCHE PATENTANMELDUNG

(11) **EP 2 747 032 A1**
(43) Veröffentlichungstag der Anmeldung: **25.06.2014**
(21) Anmeldenummer: 12199023.8
(22) Anmeldetag: 21.12.2012
(51) Int. Cl.: G06T 17/05

(54) **Verfahren zur fotorealistischen Visualisierung von einem dreidimensionalen Gelände-Datensatz in Echtzeit**

(71) Anmelder: 3D Reality Maps GmbH, 82065 Baierbrunn (DE)
(72) Erfinder: Wahl, Roland, 53129 Bonn (DE); Siegert, Florian, 82065 Baierbrunn (DE)
(74) Vertreter: Vossius & Partner

(57) **Zusammenfassung**

Die vorliegende Erfindung betrifft Verfahren zur fotorealistischen Visualisierung von einem hierarchisch aufbereiteten dreidimensionalen Gelände-Datensatz in Echtzeit auf einem mobilen Endgerät sowie ein Computerprogramm zur Durchführung dieses Verfahrens.

## Beschreibung

Die vorliegende Erfindung betrifft ein Verfahren zur fotorealistischen Visualisierung von einem dreidimensionalen Gelände-Datensatz in Echtzeit auf einem mobilen Endgerät. Ferner betrifft die vorliegende Erfindung ein Computerprogramm zur Durchführung des Verfahrens und ein Tablet PC oder Smartphone, das geeignet ist, dieses Verfahren durchzuführen.

Es sind bereits eine Vielzahl von GPS-Navigationsgeräten bekannt. Diese zielen jedoch in erster Linie auf Navigation im Verkehr ab und verzichten in der Regel vollständig auf eine realistische oder gar dreidimensionale Darstellung der Umgebung. Vielmehr basieren diese Navigationsgeräte auf einem relativ schematischen Kartenmaterial. Darüber hinaus sind einige spezialisierte GPS-Navigationsgeräte für die Anwendung im Outdoor-Bereich bekannt, die sich beispielsweise auf Navigation bei Wanderungen oder Mountainbike-Touren spezialisiert haben. Auch diese Geräte sind jedoch in der Regel relativ simpel gestaltet und basieren auf einfachem Kartenmaterial.

Zwischenzeitlich haben sich mobile Endgeräte wie Tablets und Smartphones soweit verbessert, dass diese, mit einem entsprechenden Programm ausgestattet, ebenfalls als GPS-Navigationsgeräte dienen können. Jedoch basieren auch diese Programme für mobile Endgeräte in der Regel auf relativ einfachem und schematischen Kartenmaterial oder Luft-/Satellitenbildern (vgl. zum Beispiel Google Maps). Falls 3D-Geometrien zum Einsatz kommen (vgl. zum Beispiel Google Earth), so ist die Darstellung weit von einer fotorealistischen 3D-Darstellung entfernt, da nur der grobe Geländeverlauf wiedergegeben wird. Zwar sind grundsätzlich Technologien bekannt, mithilfe derer ein dreidimensionaler Gelände-Datensatz fotorealistisch visualisiert werden kann. Jedoch stellt die Umsetzung solcher bekannter Verfahren auf einem mobilen Endgerät mit begrenzter Speicher- und Prozessorkapazität eine große Herausforderung dar. Gerade für Outdoor-Anwendungen kann jedoch die Visualisierung mittels schematischer Karten große Nachteile für den Anwender mit sich bringen, da das Abgleichen der tatsächlich wahrgenommenen Geländeinformationen mit einer schematischen, in der Regel zweidimensionalen Darstellung auf einem Display dem im Kartenlesen unerfahrenen Anwender häufig Probleme bereitet. Dies gilt in besonderem Maße für Höhenprofile, die auf zweidimensionalen Karten in der Regel mittels Höhenlinien dargestellt werden und die dem ungeübten Anwender ein gehöriges Maß an Vorstellungskraft abverlangen.

Es ist daher eine Aufgabe der vorliegenden Erfindung, bekannte Verfahren zur Visualisierung von Gelände und zur GPS-Navigation zu verbessern. Es ist insbesondere eine Aufgabe der vorliegenden Erfindung, bekannte Verfahren dahingehend zu verbessern, dass dem ungeübten Nutzer ein Abgleichen der auf einem Display dargestellten Informationen mit der tatsächlich wahrgenommenen Umgebung möglichst einfach gemacht wird.

Diese Aufgabe wird durch ein Verfahren gemäß Anspruch 1 gelöst. Bevorzugte Ausführungsformen finden sich in den abhängigen Ansprüchen. Demnach stellt die vorliegende Erfindung ein Verfahren zur fotorealistischen Visualisierung von einem dreidimensionalen Gelände-Datensatz in Echtzeit auf einem mobilen Endgerät mit einem Prozessor und einem Display bereit. Erfindungsgemäß werden zunächst die Daten des dreidimensionalen Gelände-Datensatzes hierarchisch aufbereitet, wobei unterschiedliche Hierarchiestufen der Daten gebildet werden. Die einzelnen Hierarchiestufen weisen jeweils unterschiedlich viele (Daten-)Zellen auf, wobei die Zellen unterschiedlicher Hierarchiestufen unterschiedliche Auflösung aufweisen. Ferner wird, bevorzugt durch einen Anwender, eine aktuelle Kameraperspektive, d.h. ein aktueller Kamerapunkt und ein aktueller Kamerablickwinkel ausgehend von diesem Kamerapunkt, festgelegt. Dann werden die für die aktuelle Kameraperspektive relevanten Zellen, bevorzugt durch top-down-Traversierung der Hierarchiestufen, ermittelt. Dabei werden bevorzugt die unterschiedlichen Hierarchiestufen rekursiv durchlaufen, bis jeweils die Auflösung einer bestimmten Zelle einer bestimmten Hierarchiestufe für hinreichend erachtet wird. Anschließend werden diejenigen den ermittelten Zellen zugeordneten Daten in den Prozessor des mobilen Endgeräts, die nicht bereits im Prozessor vorliegen. Schließlich werden die den ermittelten Zellen zugeordneten Daten auf dem Display des mobilen Endgeräts dargestellt.

Unter dem aktuellen Kamerapunkt wird dabei ein virtueller Punkt im dreidimensionalen Raum verstanden, aus dessen Perspektive der Anwender das dreidimensionale Gelände dargestellt haben möchte. Unter dem aktuellen Kamerablickwinkel ist dabei die Blickrichtung auf das Gelände ausgehend von diesem virtuellen Punkt im dreidimensionalen Raum und ein bestimmter Öffnungswinkel zu verstehen, der das aus dieser Perspektive erfasste Gelände einschließt.

Eine Visualisierung in Echtzeit bedeutet im Rahmen einer interaktiven Visualisierung, bei der der aktuelle Kamerapunkt und/oder der aktuelle Kamerablickwinkel durch Interaktion eines Anwenders mit dem mobilen Endgerät geändert wird, eine Visualisierung von mehreren Bildern pro Sekunde, bevorzugt von mindestens fünf Bildern pro Sekunde, stärker bevorzugt von mindestens zehn Bildern pro Sekunde und besonders bevorzugt von mindestens fünfzehn Bildern pro Sekunde. Besonders bevorzugt erfolgt eine Visualisierung von mindestens zwanzig Bildern pro Sekunde, sodass der Eindruck einer kontinuierlichen Bewegung entsteht.

Die für den aktuellen Kamerablickwinkel relevanten Zellen definierter Auflösung werden erfindungsgemäß bevorzugt derart ermittelt, dass die Auflösung für eine bestimmte Zelle davon abhängt, wie weit diese Zelle vom aktuellen Kamerapunkt entfernt ist. Die relevanten Zellen definierter Auflösung werden dabei bevorzugt derart bestimmt, dass insgesamt ein fotorealistisches Bild auf dem Display des mobilen Endgeräts dargestellt werden kann.

Wird beim Festlegen einer aktuellen Kameraperspektive eine einer vorhergehenden Darstellung zugrundeliegende Kameraperspektive geändert, so kann ein Teil der von der neuen Kameraperspektive erfassten Geländezelle bereits in der vorhergehenden Kameraperspektive erfasst gewesen sein. Ändert sich eine oder mehrere dieser Zellen (definierter Auflösung) nicht, so müssen die entsprechenden Daten nicht erneut in den Prozessor des mobilen Endgeräts geladen werden. Stattdessen werden nur diejenigen Daten der relevanten Daten in den Prozessor des mobilen Endgeräts geladen, die nicht bereits im Prozessor vorliegen. Dadurch wird die Performance entscheidend erhöht.

Der dreidimensionale Gelände-Datensatz weist bevorzugt Bilddaten des Geländes und Höhenprofilinformationen auf. Bevorzugt handelt es sich dabei um stereoskopische Auswertungen von Luftbildern und/oder mittels Lidar-Befliegungen erzeugte hochaufgelöste Oberflächenmodelle. Bevorzugt handelt es sich bei dem dreidimensionalen Gelände-Datensatz um ein digitales Oberflächenmodell, welches im Gegensatz zum digitalen Geländemodell auch Daten zu Bebau, Bewuchs, etc. enthält.

Um einen fotorealistischen Eindruck zu erzielen, ist das Verfahren bevorzugt dazu geeignet, eine Auflösung in der Ebene (Sample-Dichte bzw. Rasterauflösung) von 100 cm oder besser, bevorzugt von 75 cm oder besser, stärker bevorzugt von 50 cm oder besser, noch stärker bevorzugt von 25 cm oder besser und besonders bevorzugt von 10 cm oder besser zu ermöglichen. Ferner ist es im Hinblick auf eine fotorealistische Darstellung bevorzugt, dass das Verfahren eine Visualisierung mit einer Höhenauflösung von 100 cm oder besser, bevorzugt von 75 cm oder besser, stärker bevorzugt von 50 cm oder besser, noch stärker bevorzugt von 25 cm oder besser und besonders bevorzugt von 10 cm oder besser ermöglicht. Besonders bevorzugt wird eine Auflösung in der Ebene und im Höhenprofil von etwa 5 cm erzielt.

Das mobile Endgerät ist bevorzugt ein Tablet PC oder Smartphone und die relevanten Daten werden bevorzugt von einem lokalen Speicher, einem Server oder aus dem Internet geladen.

Gemäß einer bevorzugten Ausführungsform der vorliegenden Erfindung wird der dreidimensionale Gelände-Datensatz bzw. das digitale Oberflächenmodell vorab hierarchisch aufbereitet. Dieser Verfahrensschritt findet bevorzugt auf einem zentralen Server oder PC statt. Bevorzugt werden dabei die Daten des dreidimensionalen Gelände-Datensatzes in der vorliegenden Originalauflösung (d.h. wie sie beispielsweise nach Lidar-Befliegung oder stereoskopischer Auswertung vorliegen) auf unterschiedlichen Hierarchiestufen in unterschiedliche viele Zellen zerlegt, wobei jede Zelle n Pixel enthält und wobei jeweils eine Hierarchiestufe mit gröberer Auflösung dadurch gebildet wird, dass jeweils m Zellen einer Hierarchiestufe mit feinerer Auflösung zu jeweils einer einzigen Zelle dieser Hierarchiestufe mit gröberer Auflösung zusammengefasst werden. Bevorzugt werden die Daten für die Zusammenfassung der m Zellen in eine einzelne Zelle tiefpass-gefiltert, wobei die m x n Pixel der m Zellen zu n Pixel der einzelnen Zelle verarbeitet werden. In einer bevorzugten Ausführungsform der vorliegenden Erfindung sind die Zellen quadratisch, wobei jeweils 2 x 2 Zellen einer Hierarchiestufe mit feinerer Auflösung zu jeweils einer einzigen Zelle einer Hierarchiestufe mit gröberer Auflösung zusammengefasst werden. Eine Zelle kann dabei bevorzugt 32 x 32, 64 x 64, 128 x 128, 256 x 256 oder 512 x 512 Bildpixel und/oder Höhenwerte enthalten.

Für die Geometriedaten des digitalen Oberflächenmodells wird bevorzugt auf der feinsten Detailstufe zunächst für das Höhenmodell eine Dreiecksapproximation mit garantierter Güte berechnet. Dabei wird bevorzugt darauf geachtet, dass die Kantenverläufe an den Rändern benachbarter Zellen jeweils identisch sind. Diese Dreiecksnetze werden dann auf den gröberen Detailstufen jeweils entlang ihrer gemeinsamen Kanten zu einem Dreiecksnetz verschmolzen, welches wiederum gröber approximiert wird. Die Genauigkeit der Approximation wird dabei bevorzugt so gewählt, dass sie auf jeder Detailstufe mit der Samplingdichte der Bilddaten zusammenfällt.

Gemäß einer bevorzugten Ausführungsform der vorliegenden Erfindung weist das Verfahren ferner den Schritt des Erfassens der aktuellen GPS-Position des mobilen Endgerätes und des Darstellens der aktuellen GPS-Position in der aktuellen Kameraperspektive auf dem Display auf. Mit anderen Worten wird die aktuelle GPS-Position des mobilen Endgeräts und damit des Anwenders in die dreidimensionale Geländedarstellung der aktuellen Kameraperspektive implementiert. Dadurch, dass die Geländedarstellung auf dem Display eine fotorealistische Visualisierung der Umgebung darstellt, wird dem Anwender das Abgleichen der auf dem Display dargestellten Situation mit seiner tatsächlichen Umgebung erheblich vereinfacht. Erfindungsgemäß kann dabei in die fotorealistische Darstellung des Geländes auch zusätzliche Information eingeblendet sein. So können beispielsweise Wanderwege, Berghütten und/oder Restaurants, Aussichtspunkte und/oder Gipfel in der Visualisierung des Geländes markiert sein. Will nun der Anwender beispielsweise einem bestimmten Wanderweg folgen oder einen bestimmten Aussichtspunkt erreichen, so muss er nicht mühsam seine reale Umgebung mit einer schematischen Karte abgleichen, sondern kann die in der fotorealistischen Darstellung zur Verfügung gestellte Information eins zu eins auf die ihn umgebende Realität übertragen. Dies erleichtert und verbessert die Navigation im freien Gelände ganz entscheidend.

Darüber hinaus ist es bevorzugt, dass auf der Basis der erfassten GPS-Position und eines durch einen Anwender spezifizierten Navigationszieles Navigationsinstruktionen ermittelt und graphisch und/oder akustisch an den Anwender weitergegeben werden. Dies kann beispielsweise mittels eines in der fotorealistischen Darstellung eingeblendeten Wegverlaufes und/oder einem Richtungshinweis (z.B. mittels eines Pfeiles) erfolgen. Es ist ferner bevorzugt, dass die GPS-Position zu verschiedenen Zeiten erfasst und gespeichert wird, wobei eine durch mehrere gespeicherte GPS-Positionen gebildete Route in dem aktuellen Kamerablickwinkel auf dem Display dargestellt wird. Dabei können bevorzugt sowohl aktuelle Routen, die gerade absolviert wurden, dargestellt werden als auch zu einem anderen Zeitpunkt von diesem oder einem anderen Anwender gespeicherte Routen.

Gemäß einer weiteren bevorzugten Ausführungsform der vorliegenden Erfindung kann der Anwender auf unterschiedliche Basis-Datensätze zugreifen, die beispielsweise das Gelände zu unterschiedlichen Jahreszeiten zeigen. Beispielsweise können ein Sommer- und ein Winter-Datensatz abgespeichert sein, auf den je nach Bedarf zugegriffen werden kann. So kann der Anwender beispielsweise bei einer Wanderung im Sommer auf die fotorealistische Darstellung der Sommerlandschaft zugreifen und während einer Skitour im Winter dasselbe Gelände verschneit visualisieren lassen.

Bevorzugt kann der aktuelle Kamerapunkt und/oder der aktuelle Kamerablickwinkel ausgehend von diesem Kamerapunkt durch Interaktion eines Anwenders mit dem mobilen Endgerät, bevorzugt durch Interaktion eines Anwenders mit dem Display des mobilen Endgeräts, festgelegt und in Echtzeit geändert werden. Dies kann mithilfe von Bediensymbolen und/oder einer Tastatur erfolgen. Bevorzugt erfolgt die Interaktion mithilfe von Fingergesten auf einem Touchscreen des mobilen Endgeräts. Die auf dem Display dargestellten Daten werden dabei bevorzugt in Echtzeit aktualisiert.

Es ist ferner bevorzugt, dass Zusatzinformationen zu Aktivitäten und Events, die in der näheren Umgebung der erfassten GPS-Position geplant sind oder gerade stattfinden, eingeblendet werden. Ferner ist es bevorzugt, mittels mobiler Telekommunikation Positionsdaten anderer Anwender von mobilen Endgeräten zu erfassen und auf dem Display des mobilen Endgeräts in die dreidimensionale Darstellung des Geländes eingebunden darzustellen.

Die vorliegende Erfindung betrifft ferner ein Computerprogramm, insbesondere eine App für einen Tablet PC oder ein Smartphone, zur Durchführung des oben beschriebenen Verfahrens. Ferner betrifft die vorliegende Erfindung einen Tablet PC oder ein Smartphone, das geeignet ist, das oben beschriebene Verfahren durchzuführen.

Die vorliegende Erfindung erlaubt es, sehr große (im Prinzip beliebig große) fotorealistische 3D-Datensätze zu visualisieren. Die Erfindung basiert unter Anderem auf einer hierarchischen LOD (level of detail) Technologie. Dabei werden nach einer automatisierten Vorverarbeitung der Datensätze die relevanten Daten für die aktuelle Ansicht in den Viewer geladen, und zwar nur in der für die Ansicht notwendigen Auflösung. Das Laden erfolgt dabei entweder aus dem lokalen Speicher oder über das Internet. Durch die effiziente Komprimierung sowie das Cashing und die Skalierbarkeit der Ansichten können beliebig große 3D-Datensätze in einem hohen Detailgrad auf mobilen Endgeräten dargestellt werden. Das erfindungsgemäße Verfahren ermöglicht es dem Benutzer, fotorealistische 3D-Stadt- und Landschaftsmodelle in Echtzeit auf dem Display eines mobilen Endgeräts wie einem Tablet PC oder Smartphone im Internet anzusehen. Für eine möglichst effektive Nahbereichsnavigation im urbanen wie im ländlichen Bereich stellt eine hochaufgelöste, fotorealistische 3D-Darstellung eine substantielle Verbesserung gegenüber herkömmlichen Lösungen dar. Eine hochaufgelöste 3D-Darstellung erleichtert die Orientierung und erlaubt die Einbindung von aktuellen oder aufgezeichneten Touren und Tracks im fotorealistischen räumlichen Kontext.

Bevorzugte Ausführungsformen der vorliegenden Erfindung werden nachfolgend mit Bezug auf die Figuren näher beschrieben. Es zeigen:
- Fig. 1: schematisch eine Quadtree-Hierarchie;
- Fig. 2: schematisch einen aktiven Quadtree;
- Fig. 3a: eine Bounding Box der Geometrie;
- Fig. 3b: ein Dreiecksnetz mit einer Approximationsgüte von 2 m;
- Fig. 3c: eine Luftbildkachel mit einer Auflösung von 2 m;
- Fig. 4: ein Fließdiagramm der bei Akquise und Vorverarbeitung der Daten bevorzugten Prozesse;
- Fig. 5: ein Fließdiagramm der bei der Darstellung auf Client-Seite bevorzugten Prozesse;
- Fig. 6: ein Fließdiagramm eines bevorzugten Traversierungsprozesses des Quadtree zum Aufbau des aktiven Quadtree; und
- Fig. 7: ein Fließdiagramm eines bevorzugten Traversierungsprozesses des Quadtree zur Darstellung des aktiven Quadtree.

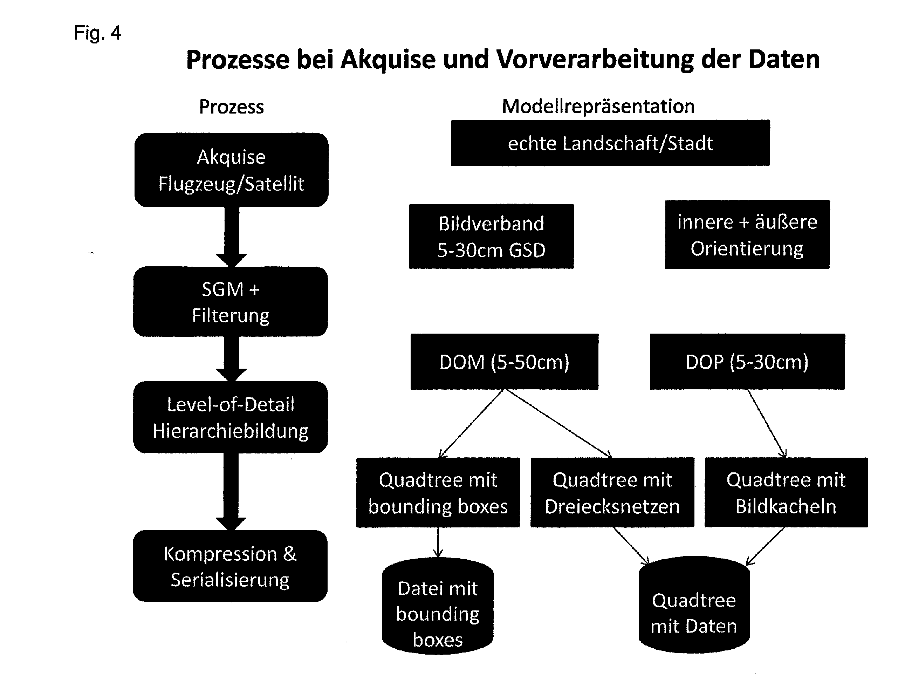

In den Figuren 4-7 ist eine bevorzugte Ausführungsform des erfindungsgemäßen Verfahrens mithilfe von Fließdiagrammen schematisch dargestellt. Dem Fachmann wird klar sein, dass nicht sämtliche dargestellte Verfahrensschritte für den erfindungsgemäßen Gegenstand notwendig sind und dass das dargestellte Ausführungsbeispiels daher nicht limitierend zu bewerten ist.

Figur 4 zeigt bevorzugte Prozesse bei der Akquise und Vorverarbeitung der Daten. In der linken Spalte sind die einzelnen Prozesse dargestellt, wohingegen die rechte Spalte eine Modellrepräsentation versinnbildlicht. Das Verfahren beginnt mit der Akquise von Daten mithilfe eines Flugzeugs und/oder Satelliten. Mithilfe einer stereoskopischen Auswertung der Luftbilder durch z.B. Semi-Global Matching (SGM) werden die hochaufgelösten Oberflächenmodelle erzeugt. Diese entsprechen in dem Modell einem digitalen Oberflächenmodell (DOM) einerseits und digitalen Orthofotografiedaten (DOP) andererseits. Anschließend wird eine Level-Of-Detail (LOD)-Hierarchie gebildet, die in dem Modell dem Quadtree mit den Bounding Boxes, dem Quadtree mit dem Dreiecksnetzen und dem Quadtree mit dem Bildkacheln bzw. Bildzellen entspricht. Kompression und Serialisierung führen dann zu einer Datei mit Bounding Boxes und einem Quadtree mit Daten.

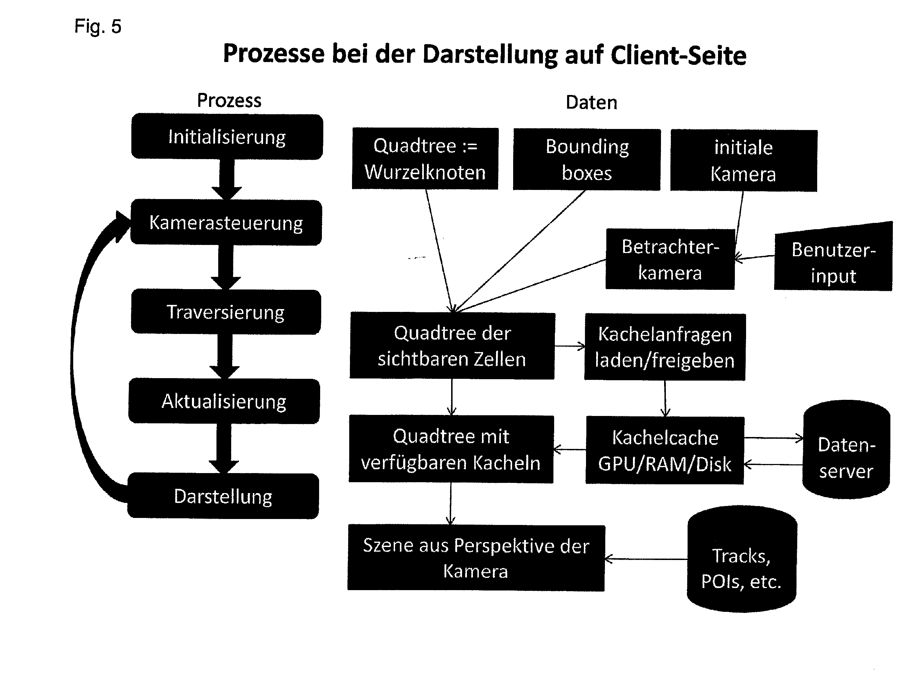

Figur 5 zeigt in ähnlicher Weise beispielhafte Prozesse beider Darstellungen auf der Client-Seite. Zunächst findet eine Initialisierung im Hinblick auf den Quadtree, die Bounding Boxes und die initiale Kameraperspektive statt. Ein Benutzerinput steuert dabei die virtuelle Betrachterkamera. Im Rahmen einer sogenannten Traversierung wird der Quadtree der sichtbaren Zellen erstellt und entsprechende Kachelanfragen geladen und/oder freigegeben. Der Kachelcash stellt, unter Umständen in Kooperation mit einem Datenserver, die verfügbaren Kacheln für den Quadtree bereit, mit deren Hilfe dann die Szene aus Perspektive der Kamera dargestellt wird. Unter Umständen können hier Tracks, Points of Interest (POI) usw. eingeblendet werden.

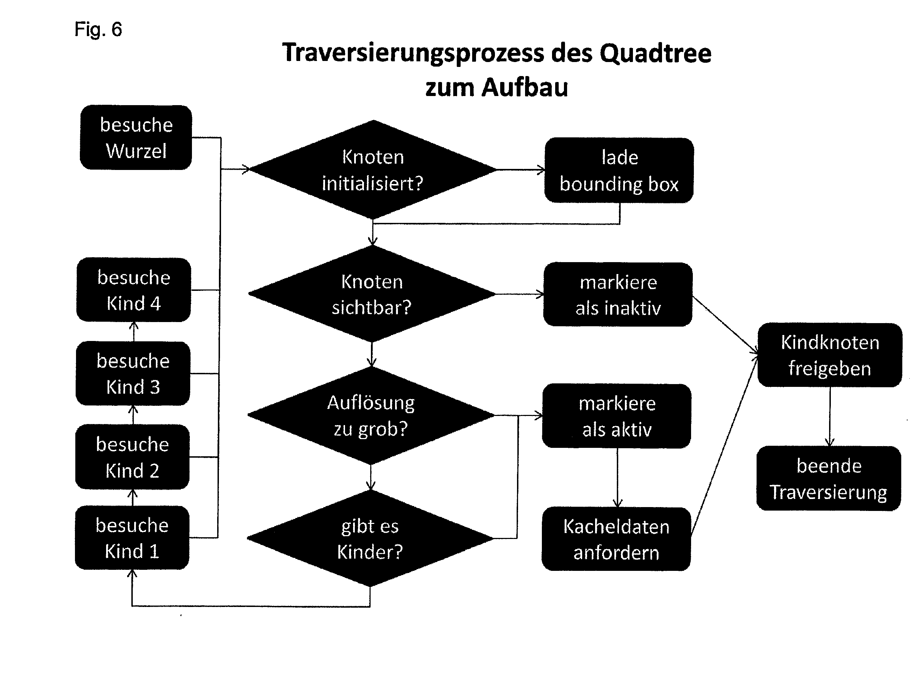

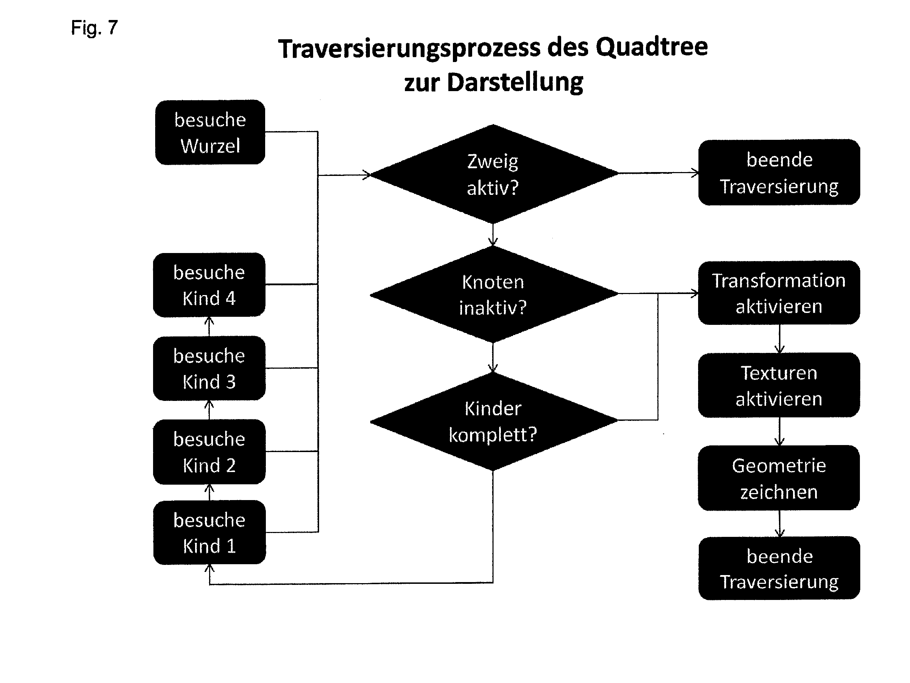

Der Traversierungsprozess des Quadtree zum Aufbau und zur Darstellung ist jeweils in den Figuren 6 und 7 dargestellt. Ausgehend von der Wurzel wird zunächst geprüft, ob ein bestimmter Knoten initialisiert ist. Ist dies nicht der Fall, wird die entsprechende Bounding Box geladen und anschließend (oder sogleich) geprüft, ob der entsprechende Knoten sichtbar ist. Falls nicht, wird dieser als inaktiv markiert, der Kindknoten freigegeben und die Traversierung beendet. Ist der Knoten sichtbar, wird geprüft, ob die Auflösung zu grob ist. Falls nein, wird der Knoten als aktiv markiert, werden die entsprechenden Kacheldaten angefordert, der Kindknoten freigegeben und die Traversierung beendet. Ist die Auflösung zu grob, wird geprüft, ob es Kinder gibt. Ist dies nicht der Fall, wird der Knoten abermals als aktiv markiert, werden die entsprechenden Kacheldaten angefordert, der Kindknoten freigegeben und die Traversierung beendet. Gibt es Kinder, so werden diese besucht und der Prozess beginnt abermals bei der Initialisierung des Knotens.

Der Traversierungsprozess des Quadtree zur Darstellung beginnt ebenfalls bei der Wurzel und fragt zunächst ab, ob ein bestimmter Zweig aktiv ist. Falls nicht, wird die Traversierung beendet. Falls doch, wird geprüft, ob der Knoten inaktiv ist. Ist dies nicht der Fall, werden die Transformationen und die Texturen aktiviert, eine Geometrie gezeichnet und die Traversierung beendet. Ist der Knoten inaktiv, wird geprüft, ob sämtliche Kinder komplett sind. Falls nicht, werden wieder die Transformationen und die Texturen aktiviert, die Geometrie gezeichnet und die Traversierung beendet. Falls doch, wird der gesamte Prozess mit den entsprechenden Kindern wiederholt

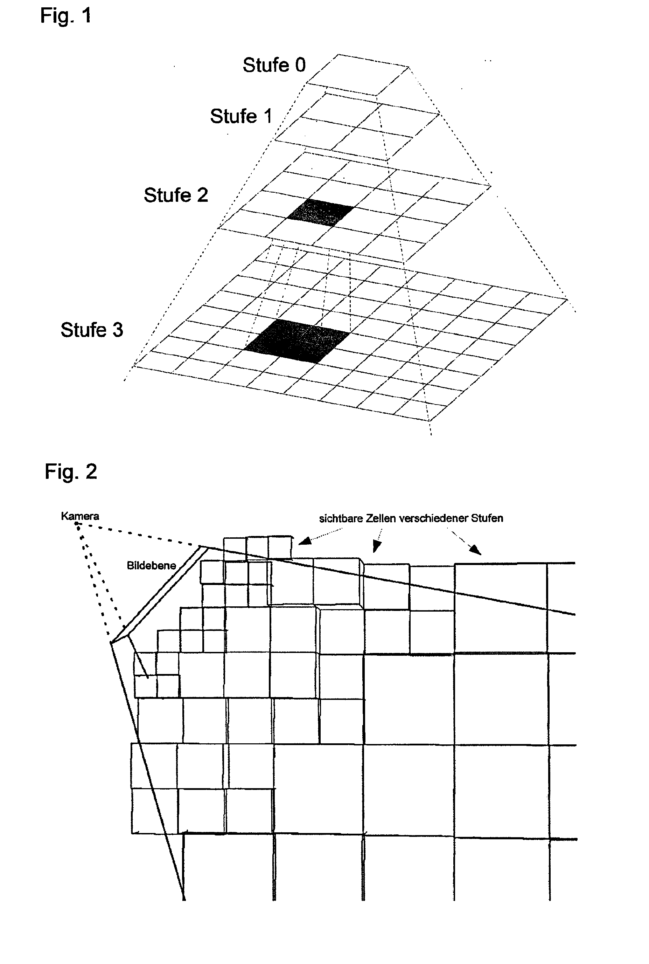

Gemäß einer bevorzugten Ausführungsform der vorliegenden Erfindung erfolgt die Aufbereitung der Oberflächenmodelle und Bilddaten in einer hierarchischen Weise. Dazu werden die Daten in der Originalauflösung zunächst gekachelt, d.h. in bevorzugt quadratische Bestandteile fester Rastergröße (z.B. 64 x 64 pixel und/oder Höhenwerte) zerstückelt. Über diesen Basis-Kacheln wird dann eine sogenannte Quadtree-Hierarchie aufgebaut (vgl. Fig. 1). Dazu bilden je 2 x 2 benachbarte Kacheln der feineren Detailstufe die Basis für eine Kachel auf der nächstgröberen Detailstufe, bis eine Detailstufe erreicht wird, deren einzige Kachel den Gesamtdatensatz überdeckt. Von Stufe zu Stufe verdoppelt sich dabei jeweils die Auflösung bzw. Genauigkeit der Daten. Die Zellen bzw. Kacheln enthalten dabei keine atomaren Informationen (Farbwert/Höhenwert), sondern repräsentieren jeweils einen Ausschnitt des Datensatzes (z.B. 64 x 64 Farbwerte).

Das initiale Dreiecksnetz wird auf der feinsten Stufe zunächst durch ein regelmäßiges quadratisches Netz gebildet, dessen Eckpunkte die jeweils 2 x 2 benachbarten Höhenwerte interpolieren. Anstelle von 128 x 128 Höhenwerten erhält man so dann z.B. 129 x 129 Netzknoten. Die Gitterzellen werden anschließend bliebig trianguliert. Bevorzugt wird das Gitter zunächst in sogenannter "restricted quadtree Manier" trianguliert und mittels Knotenentfernung unter Hausdorff-Abstandsmetrik approximiert. Das Dreiecksnetz einer Zelle wird zunächst aus den vier Dreiecksnetzen der 2 x 2 Kacheln feinerer Auflösung gebildet. Dieses wird anschließend durch Edge-collapse Operationen so stark approximiert, dass der Hausdorffabstand zum initialen Dreiecksnetz das Genauigkeitsmaß der Detailstufe nicht überschreitet. Bei der Abschätzung des Hausdorffabstands werden zusätzliche Störeinflüsse wie der Genauigkeitsverlust durch Quantisierung der Vertices bereits berücksichtigt.

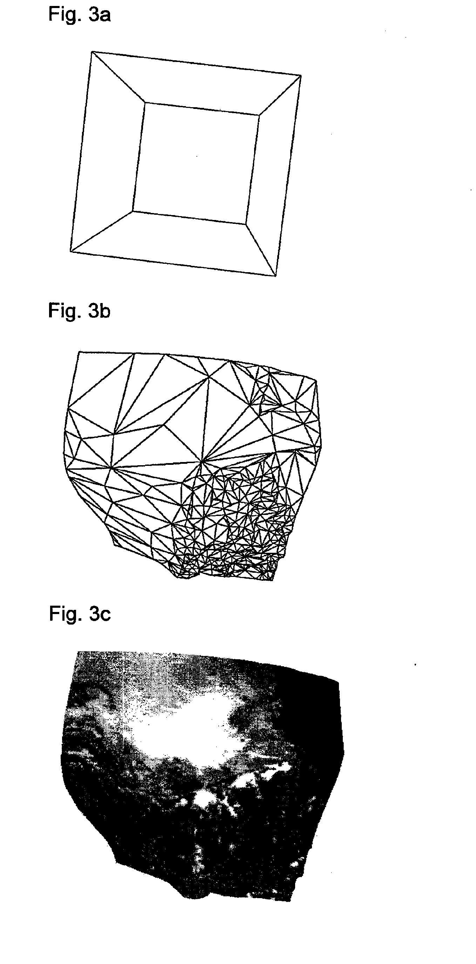

Die Repräsentation der Daten innerhalb einer Kachel bzw. Zelle wird für die jeweilige Detailstufe optimiert. Für die Bilddaten bedeutet dies, dass die Daten sukzessive tiefpass-gefiltert und auf eine feste Auflösung von z.B. 64 x 64 pixel resampled werden (da nach dem Zusammenfassen der Kacheln ja zunächst 128 x 128 pixel vorliegen). Für die Geometriedaten wird auf der feinsten Detailstufe zunächst für das Höhenmodell eine Dreiecksapproximation mit garantierter Güte berechnet (vgl. Fig. 3b). Dabei wird darauf geachtet, dass die Kantenverläufe an den Rändern benachbarter Zellen jeweils identisch sind. Diese Dreiecksnetze werden dann auf den gröberen Detailstufen jeweils entlang ihrer gemeinsamen Kanten zu einem Dreiecksnetz verschmolzen, welches wiederum gröber approximiert wird. Die Genauigkeit der Approximation wird dabei so gewählt, dass sie auf jeder Detailstufe mit der Samplingdichte der Bilddaten zusammenfällt. Weicht die Samplingdichte der Bild- und Höhendaten initial von einander ab, so werden die Daten initial so resampled, dass der feinere Datensatz anschließend exakt um 2^{k} feiner ist. Daraus ergeben sich für den feineren Datensatz k zusätzliche Detailstufen, welche in Form einer Pyramide (also nicht hierarchisch) ergänzt werden. Da die Oberflächenmodelle in dem erfindungsgemäßen Verfahren aus denselben Primärdaten abgeleitet werden wie die Orthobilddaten, kann in der Regel eine nur geringe Abweichung k = 0, 1 oder 2 erreicht werden.

Die Geometrie- und Bilddaten werden bestmöglich komprimiert z.B. auf einem Server hinterlegt. Dazu wird jede Bildkachel mit einem Standard-Bildkompressionsverfahren codiert, welches bevorzugt einer oder mehrerer (bevorzugt allen) der folgenden Anforderungen genügt: guter Erhalt des Bildsignals, gute Kompression zur Übertragung, kostengünstiges Entpacken auf dem mobilen Endgerät.

Dazu kommt bevorzugt das JFIF mit einer Qualität um 90 zum Einsatz. In breitbandigen Szenarien, wo die Kompression eine etwas geringere Rolle spielt, sind Hardware-unterstützte codecs, wie DXTC oder ETC von Vorteil, weil sie client-seitig weniger Speicher verbrauchen und nicht entpackt werden müssen. Allerdings sollte dann auf die hinreichende Konformität der Zielgeräte geachtet werden.
Die Geometriekacheln oder -zellen enthalten Dreiecksnetze, welche topologisch äquivalent zu einer Scheibe sind. Die Konnektivität dieser Dreiecksnetze wird ähnlich zu Standardverfahren (Cut-border-Verfahren, Edgebreaker-Verfahren) bevorzugt über die Durchmusterungshistorie codiert, weil sie sich dann sehr effizient wieder aus dem Bitstrom aufbauen lässt. Die Lage der Vertices wird innerhalb der Kachel bevorzugt so quantisiert, dass die Genauigkeit der Detailstufe immer noch garantiert werden kann. Dazu sollte bevorzugt der Rundungsfehler, der dabei entsteht, bereits im Vorhinein bei der Berechnung der Approximation berücksichtigt werden.

Zusätzlich zu den approximativen geometrischen Daten wird bevorzugt pro Kachel bzw. Zelle auch noch eine sogenannte "bounding box" berechnet, i.e. ein Quader der das gesamte Dreiecksnetz der Kachel umfasst (vgl. Fig. 3a).

Dieser wird bevorzugt über den Achsen der projizierten Koordinaten der Ursprungsgeometrie bestimmt und kann daher durch eine minimale und maximale Höhe innerhalb der Kachel vollständig repräsentiert werden, da sich die Ausdehnungen in den beiden anderen Dimensionen implizit aus der Kacheladresse im Quadtree ergeben. Damit die bounding box bei der Traversierung der Hierarchie für tragfähige Entscheidungen herangezogen werden kann, sollte allerdings bevorzugt auch sichergestellt werden, dass sie nicht nur die Geometrie der eigenen Kachel vollständig enthält, sondern auch die Geometrien aller "Kind-Kacheln". Daher werden beim Aufbau der bounding boxes bevorzugt auch die Minima und Maxima der Kind-Kacheln berücksichtigt. Zur besseren Kompression der bounding boxes werden diese bevorzugt hierarchisch codiert, so dass die Quantisierung der Minima und Maxima einer Kachel einfach relativ zur bounding box der Vater-Kachel erfolgt.

Bevorzugt wird anhand einer Hierarchie von bounding boxes entschieden, welche Kacheln bzw. Zellen in der jeweiligen Kameraperspektive (Kamerapunkt und Kamerablickwinkel) benötigt werden. Wie in Fig. 2 schematisch dargestellt, wird für die Darstellung der Szene aus einer Kameraperspektive zunächst der aktive Quadtree bestimmt. Angefangen von der einzigen Zelle der Stufe 0 (vgl. Fig. 1) werden die Zellen anhand ihrer Boxen mit dem Kamera-Frustum geschnitten und in sogenannter top-down-Manier solange verfeinert, bis die Auflösung eine adäquate Darstellung ermöglicht. Aufgrund des Strahlensatzes wird in jeweils doppelter Entfernung zur Kamera nur noch die halbe Auflösung benötigt. Diese Zellen bilden dann den aktiven Quadtree. Die zugehörigen Zelldaten werden geladen und dargestellt.
Diese Zellen bzw. Kacheln werden sukzessive von einem cache angefragt. Die im cache vorhandenen Daten werden genutzt, um das Gelände darzustellen. Dabei können verschiedene Texturen (z.B. Sommer und Winter; hochauflösend und niedrig auflösend) überblendet werden.

Zu jeder Quadtree-Zelle gibt es eine bounding box, die die Geometrie umfasst (vgl. Fig. 3a), die Geometrie in Form eines detaillierten Dreiecksnetzes (vgl. Fig. 3b) und die Textur in der zur Quadtree-Stufe korrespondierenden Auflösung. Fig. 3c zeigt die mit der korrespondierenden Luftbildkachel texturierte Geometrie mit einer Auflösung von 2 m.

Im erfindungsgemäßen Verfahren sind alle Informationen hochgenau georeferenziert und damit lagegenau. Vektorinformationen zu Aktivitäten und/oder Events werden bevorzugt aus Geodatenbanken in die 3D-Ansicht eingeblendet. Die "Kamera" (das heißt der dargestellte Blickwinkel) folgt bevorzugt der Position des Anwenders beim Tracking und bei der Orientierung und Navigation (mittels GPS). Bevorzugt können die Betrachtungsparameter interaktiv über multi-touch Gesten und/oder über Ikons gesteuert werden. Bewegungsdaten können bevorzugt aufgezeichnet, gespeichert und wieder eingelesen werden und weitere Informationen können über z.B. picking abgerufen werden. Live Informationen mit Positionsangaben (z.B. von anderen Nutzern der Anwendung) werden bevorzugt über das Internet gestreamt und in die 3D-Ansicht eingeblendet.

Das erfindungsgemäße Verfahren ist dafür geeignet und optimiert, auf einem mobilen Endgerät durchgeführt zu werden. Mobile Endgeräte und insbesondere Smartphones stellen diesbezüglich in vielerlei Hinsicht eine Herausforderung dar. So basieren Smartphones in der Regel auf anderen Grafikchips, haben somit eine weit geringere Grafik-Performance und weniger Grafik-Speicher und stellen eine schlankere Grafik-API (OpenGL for embedded systems ES) zur Vefügung. In der Regel werden andere Texturkompressionsverfahren angewandt und eine geringere Genauigkeit bei Grafikberechnungen erzielt. Dem kann erfindungsgemäß bevorzugt durch eine Umstellung von OpenGL auf OpenGL ES begegnet werden. Das erfindungsgemäße Verfahren skaliert mit der Anzahl der dargestellten Zellen. Halbiert man die Genauigkeit, benötigt das Verfahren nur noch ein Viertel der Performance.

Ferner haben Smartphones viel weniger Arbeitsspeicher (ca. eine Größenordnung gegenüber PC), z.B. bei iOS/Android ungefähr 100 MB. Virtueller Arbeitsspeicher wird ferner nicht automatisch zur Verfügung gestellt. Die für die fotorealistische Darstellung tatsächlich notwendigen Daten liegen bei dem erfindugnsgemäßen Verfahren (display- und genauigkeitsabhängig) meist deutlich unter der Grenze von etwa 10-30 MB. Die caches zum schnellen Wiederherstellen zuvor genutzter Daten werden erfindungsgemäß in der Größe deutlich reduziert. Durch progressives Nachladen der Daten werden zwar so öfter vorübergehend geringer aufgelöste Daten sichtbar, allerdings bleibt die Echtzeitanforderung erhalten. Bevorzugt werden Verwaltungsdatenstrukturen, z.B. für die Quadtrees nicht komplett im Speicher gehalten, sondern werden dynamisch nachgeladen. Zusätzliche Daten wie die Kollisionsflächen für die kollisionsfreie Navigation werden bevorzugt nicht komplett sondern nur ausschnittweise geladen und gecached.

## Patentansprüche

1. Verfahren zur fotorealistischen Visualisierung von einem dreidimensionalen Gelände-Datensatz in Echtzeit auf einem mobilen Endgerät mit einem Prozessor und einem Display, wobei das Verfahren die folgenden Schritte aufweist:
a) Hierarchisches Aufbereiten des Gelände-Datensatzes, wobei unterschiedliche Hierarchiestufen der Daten gebildet werden, wobei die einzelnen Hierarchiestufen jeweils unterschiedlich viele Zellen aufweisen und wobei die Zellen der einzelnen Hierarchiestufen unterschiedliche Auflösung aufweisen;
b) Festlegen einer aktuellen Kameraperspektive;
c) Ermitteln der für die aktuelle Kameraperspektive relevanten Zellen durch top-down-Traversierung der Hierarchie;
d) Laden der den ermittelten Zellen zugeordneten Daten in den Prozessor des mobilen Endgeräts, soweit diese nicht bereits im Prozessor vorliegen; und
e) Darstellen der den ermittelten Zellen zugeordneten Daten auf dem Display des mobilen Endgeräts.

2. Verfahren nach Anspruch 1, wobei der dreidimensionale Gelände-Datensatz - bevorzugt fotografische - Bilddaten des Geländes und Höhenprofilinformationen aufweist.

3. Verfahren nach Anspruch 1 oder 2, wobei das Verfahren eine Visualisierung mit einer Auflösung in der Ebene von mindestens 100 cm, bevorzugt von mindestens 75 cm, stärker bevorzugt von mindestens 50 cm, noch stärker bevorzugt von mindestens 25 cm, besonders bevorzugt von mindestens 10 cm ermöglicht.

4. Verfahren nach einem der vorherigen Ansprüche, wobei das Verfahren eine Visualisierung mit einer Auflösung in der Höhe von mindestens 100 cm, bevorzugt von mindestens 75 cm, stärker bevorzugt von mindestens 50 cm, noch stärker bevorzugt von mindestens 25 cm, besonders bevorzugt von mindestens 10 cm ermöglicht.

5. Verfahren nach einem der vorherigen Ansprüche, wobei das mobile Endgerät ein Tablet PC oder Smartphone ist und wobei die relevanten Daten von einem lokalen Speicher, einem Server oder aus dem Internet geladen werden.

6. Verfahren nach einem der vorherigen Ansprüche, wobei der Schritt des hierarchischen Aufbereitens vorab auf einem Server oder PC erfolgt und die Schritte b) - e) auf dem mobilen Endgerät erfolgen.

7. Verfahren nach einem der vorherigen Ansprüche, wobei jede Zelle n Pixel enthält und wobei jeweils eine Hierarchiestufe mit gröberer Auflösung dadurch gebildet wird, dass jeweils m Zellen einer Hierarchiestufe mit feinerer Auflösung zu jeweils einer einzigen Zelle dieser Hierarchiestufe mit gröberer Auflösung zusammengefasst werden, wobei bevorzugt die Zellen quadratisch sind und jeweils 2 x 2 Zellen einer Hierarchiestufe mit feinerer Auflösung zu jeweils einer einzigen Zelle einer Hierarchiestufe mit gröberer Auflösung zusammengefasst werden.

8. Verfahren nach Anspruch 7, wobei die Daten für die Zusammenfassung der m Zellen in eine einzelne Zelle tiefpass-gefiltert werden und wobei die m x n Pixel der m Zellen der Hierarchiestufe mit feinerer Auflösung zu n Pixel der einzelnen Zelle der Hierarchiestufe mit gröberer Auflösung verarbeitet werden.

9. Verfahren nach einem der vorherigen Ansprüche, wobei für die Geometriedaten des dreidimensionalen Geländedatensatzes auf der Hierarchiestufe mit feinster Auflösung eine Dreiecksapproximation für das Höhenmodell berechnet wird und wobei m Dreiecksnetze einer Hierarchiestufe mit feinerer Auflösung entlang ihrer Kanten zu einem Dreiecksnetz einer Hierarchiestufe mit gröberer Auflösung verschmolzen und anschließend bis zur gröberen Auflösung approximiert werden.

10. Verfahren nach Anspruch 8, wobei eine Zelle 32 x 32, 64 x 64, 128 x 128, 256 x 256 oder 512 x 512 Bildpixel und/oder Höhenwerte enthält.

11. Verfahren nach einem der vorherigen Ansprüche, ferner mit den Schritten des Erfassens der aktuellen GPS-Position des mobilen Endgerätes und des Darstellens der aktuellen GPS-Position in der aktuellen Kameraperspektive auf dem Display.

12. Verfahren nach Anspruch 12, wobei auf der Basis der erfassten GPS-Position und eines durch einen Anwender spezifizierten Navigationszieles Navigationsinstruktionen ermittelt und grafisch und/oder akustisch an den Anwender weitergegeben werden.

13. Verfahren nach einem der Ansprüche 11 und 12, wobei die GPS-Position zu verschiedenen Zeiten erfasst und gespeichert wird und wobei eine durch mehrere gespeicherte GPS-Positionen gebildete Route in der aktuellen Kameraperspektive auf dem Display dargestellt wird.

14. Verfahren nach einem der vorherigen Ansprüche, wobei die aktuelle Kameraperspektive durch Interaktion eines Anwenders mit dem mobilen Endgerät, bevorzugt durch Interaktion eines Anwenders mit dem Display des mobilen Endgeräts, festgelegt und bevorzugt in Echtzeit geändert werden kann.

15. Verfahren nach Anspruch 14, wobei die auf dem Display dargestellten Daten in Echtzeit aktualisiert werden.
